# EUROPEAN PATENT APPLICATION

(11) **EP 4 786 372 A1**
(43) Date of publication of application: **05.08.2026**
(21) Application number: 25155897.9
(22) Date of filing: 04.02.2025
(51) Int. Cl.: B65G 1/04, B65G 1/137

(54) **GOODS HANDLING STATION**

(71) Applicant: AutoStore Technology AS, 5578 Nedre Vats (NO)
(72) Inventor: AUSTRHEIM, Trond, 5578 Nedre Vats (NO); FITJE, Martin, 5578 Nedre Vats (NO); MYRBAKKEN, Joakim A, 5578 Nedre Vats (NO); GJERDEVIK, Øystein, 5578 Nedre Vats (NO); STUHAUG, Ragnar, 5578 Nedre Vats (NO)
(74) Representative: Kilburn & Strode LLP

(57) **Abstract**

The disclosure relates to a goods handling station for transferring goods to and/or from a bin of an automated storage and retrieval system. The goods handling station comprises a bin receiving area configured to receive a bin of the automated storage and retrieval system, a first goods conveyor comprising a transfer position arranged adjacent to the bin receiving area, the first goods conveyor configured to move goods in a conveying direction towards or away from the transfer position, and a goods manipulator configured to move goods in at least one direction between the transfer position of the goods conveyor and a bin received at the bin receiving area. The goods manipulator is configured to move items in a substantially horizontal direction that is substantially perpendicular to the conveying direction.

## Description

### TECHNICAL FIELD

The disclosure relates to a goods handling station. More particularly, it relates to a goods handling station for transferring goods to or from a bin of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In typical automated storage and retrieval systems, the containers delivered to the ports or stations at the periphery of the grid are manually processed by human or robot pickers before the containers are returned to the grid or carried elsewhere for additional picking restocking. Manual processing of the containers typically involves picking goods up from the container and placing them on a trolley, pallet, conveyor, or other logistical means for further processing of those goods. Alternatively, the manual processing may involve picking goods up from a trolley, pallet, conveyor, or other logistical means and placing the goods in the container. The speed at which goods can be retrieved from the grid or stocked into the grid is therefore limited by the picker's (human or robotic) movement speed.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a perspective view of a goods handling station according to an embodiment of the present disclosure;
Fig. 5B shows a plan view of the goods handling station of Fig. 5A;
Fig. 5C shows a side-on view of the goods handling station of Fig. 5A and Fig. 5B;
Fig. 6A shows plan views of a goods handling station according to an alternative embodiment of the present disclosure;
Fig. 6B shows side-on views of the goods handling station of Fig. 6A;
Fig 7A shows plan views of a goods handling station according to another alternative embodiment of the present disclosure;
Fig. 7B shows side-on views of the goods handling station of Fig. 7A; and
Fig. 8 depicts a method according to the present disclosure.

### DETAILED DESCRIPTION

In overview, the disclosure relates to a goods handling station that is capable of transferring goods to and/or from a container of an automated storage and retrieval system. The goods handling station comprises a bin receiving area, a goods conveyor, and a goods manipulator. The bin receiving area is capable of receiving a bin (i.e., a container), for example a bin delivered by a container-handling vehicle of the automated storage and retrieval system. Bins that are delivered to/received at the bin receiving area may contain goods that are designated for retrieval from the storage grid, for example for the purposes of order fulfilment. Additionally or alternatively, any bin received at the bin receiving area may be designated for the stocking (i.e., loading) of goods for storage in the storage grid. The goods conveyor is arranged such that a transfer position of the goods conveyor is adjacent to the bin receiving area such that goods can be transferred directly between the transfer position of the goods conveyor and any bin that is located at the bin receiving area. The goods conveyor is further arranged to be able to transport goods towards or away from the transfer position in a conveying direction. As described in more detail below, the direction(s) in which goods can be conveyed by the goods conveyor is substantially perpendicular to the direction of movement of goods between the goods conveyor and any bin located at the receiving area.

The goods handling station further comprises a goods manipulator that is configured to move goods in at least one direction between the transfer position of the goods conveyor and any bin located at the receiving area. In other words, the goods manipulator is configured to move goods from the goods conveyor to towards a bin located at the receiving area, and/or the goods manipulator is configured to move goods from a bin located at the receiving area towards the goods conveyor. The direction of movement of the goods caused by the goods manipulator is in a substantially horizontal direction from the bin receiving area towards the goods conveyor and/or from the goods conveyor towards the bin receiving area. In other words, the goods manipulator is configured to move items in a substantially horizontal direction between the goods conveyor and a bin located at the bin receiving area. The direction of movement of the goods caused by the goods manipulator is also substantially perpendicular to the conveying direction. In other words, the direction of movement of goods, under the action of the goods manipulator, and between the goods conveyor and a bin, is substantially perpendicular to the direction of movement of goods along the goods conveyor as goods are transported by the goods conveyor towards or away from the goods handling station.

In general, the goods handling station according to the present disclosure facilitates efficient loading of goods into, or unloading of goods from, a bin of an automated storage and retrieval system. Goods being transferred into or out of a bin at the goods handling station undergo two phases of movement that are substantially perpendicular, a first phase in which goods are moved between a bin and the goods conveyor, and a second phase in which goods are transported towards or away from the transfer position by the goods conveyor. The first and second phases may occur in any order depending on whether goods are being loaded into, or unloaded from a bin. Owing to the two phases of movement being substantially perpendicular, the efficacy of the overall goods handling station may be increased as described below.

For goods designated for loading into a bin, the goods travel along the goods conveyor in a conveying direction towards the transfer position located adjacent to the bin receiving area. When the goods have reached the transfer position, the conveyor stops to halt travel in the conveying direction. The goods manipulator then moves the goods in a substantially horizontal direction (that is substantially perpendicular to the conveying direction) towards the bin receiving area so that the goods may be received onto or into a bin located at the bin receiving area.

For goods designated for unloading from a bin that has been delivered to/received at the bin receiving area, the goods manipulator moves the goods in a substantially horizontal direction from the bin and towards the transfer position of the goods conveyor. When the goods have reached the goods conveyor, the conveyor then transports the goods away from the transfer position in a conveying direction that is substantially perpendicular to the first movement from the bin to the transfer position.

Thus, in general, the goods handling station of the present disclosure requires that the transfer of goods between the goods conveyor and a bin is always perpendicular to the preceding (when loading) or subsequent (when unloading) transport of the goods along the goods conveyor towards or away from the station. As will be described in more detail below, transferring goods between a conveyor and a bin in a direction perpendicular to the direction of travel of the goods along that conveyor enables high-speed processing of goods using simple and robust goods manipulators. In particular, the perpendicular transfer and conveying directions mean that the goods manipulator can serve the function of both loading goods from the conveyor into/onto the bin as well as unloading goods from the bin onto the conveyor.

In more detail, the perpendicular transfer and conveying directions enables the use of a simple goods manipulator comprising one or more rigid pushing elements that are configured to move goods in at least one direction between the first goods conveyor and a bin located at the bin receiving area. The rigid pushing elements are only required to operate in a reciprocating motion (along the direction of movement between the transfer position and the bin receiving area) and can be moved so as not to obstruct goods being conveyed along the conveyor. In other words, as a result of the transfer direction being perpendicular to the conveying direction, the degrees of freedom of the manipulator are minimised whilst maintaining full loading and unloading functionality.

In some embodiments, the goods manipulator comprises two pushing elements spaced apart from one another along the transfer direction (i.e., the direction along which goods may be transferred between the goods conveyor and the bin). A first one of the two pushing elements is arranged to be able to move goods from the bin towards the goods conveyor (i.e. the first pushing element is arranged to be able to unload a bin) whilst a second one of the two pushing elements is arranged to be able to move goods from the goods conveyor towards a bin located at the bin receiving area. Using two pushing elements spaced apart in this way enables the goods manipulator to both load and unload goods into/from a bin whilst reducing the required range of movement of the goods manipulator compared to a goods manipulator with a single pushing element.

In some embodiments, the goods handling station comprises a second goods conveyor arranged on an opposite side of the bin receiving area to the first goods conveyor. The second conveyor is configured to carry goods away from the goods handling station, whilst the first conveyor is configured to carry goods towards the transfer position of the first conveyor. In this embodiment, the goods manipulator can be configured to move goods from the transfer position of the first conveyor towards a bin located at the bin receiving area, as well as being configured to move goods from the bin towards the second conveyor. The second conveyor arranged in this manner therefore enables simultaneous loading and unloading of any bin located at the receiving area, thus enabling increased system efficiency.

### Automated storage and retrieval system overview

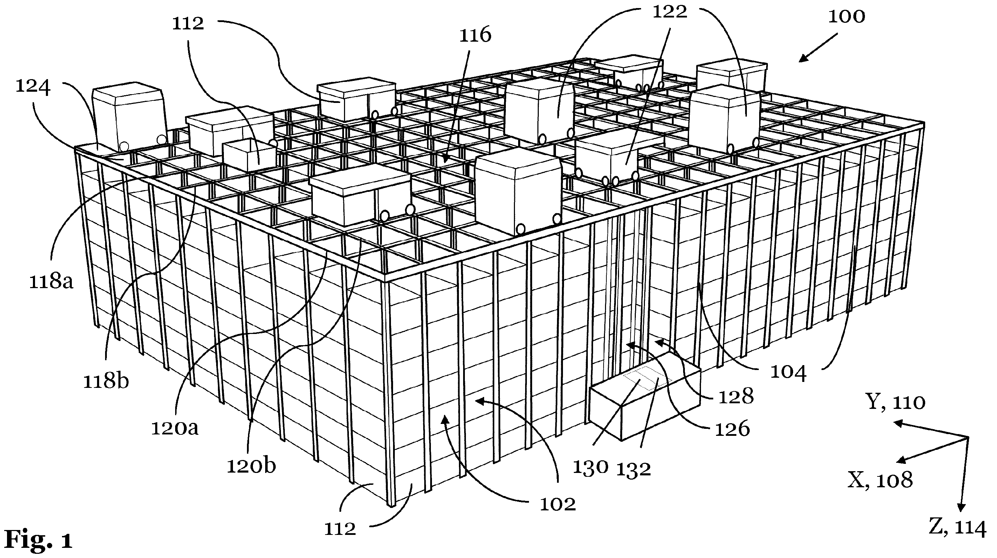

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

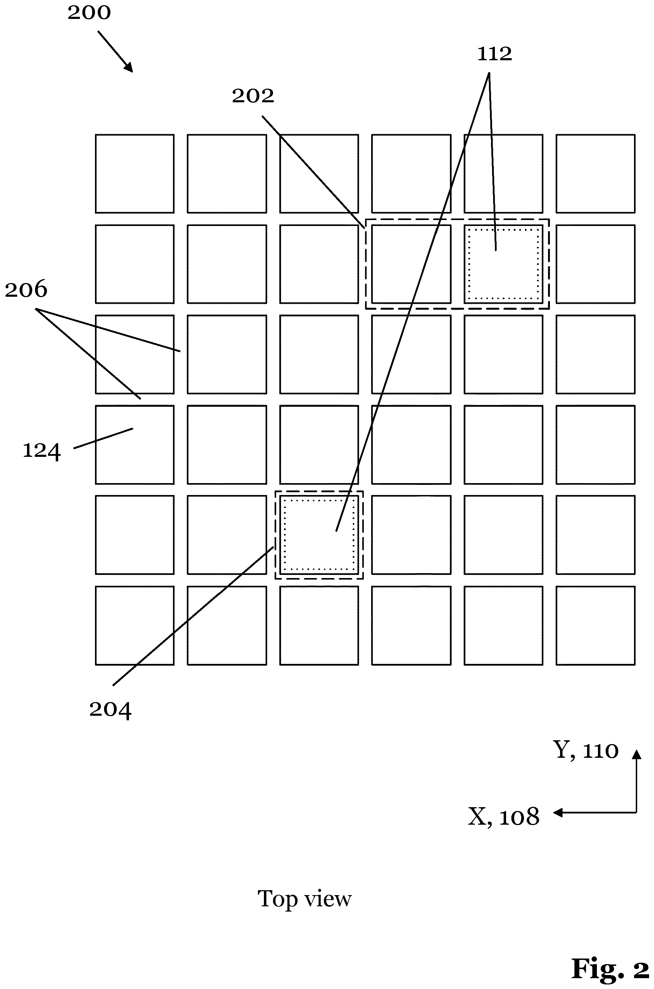

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

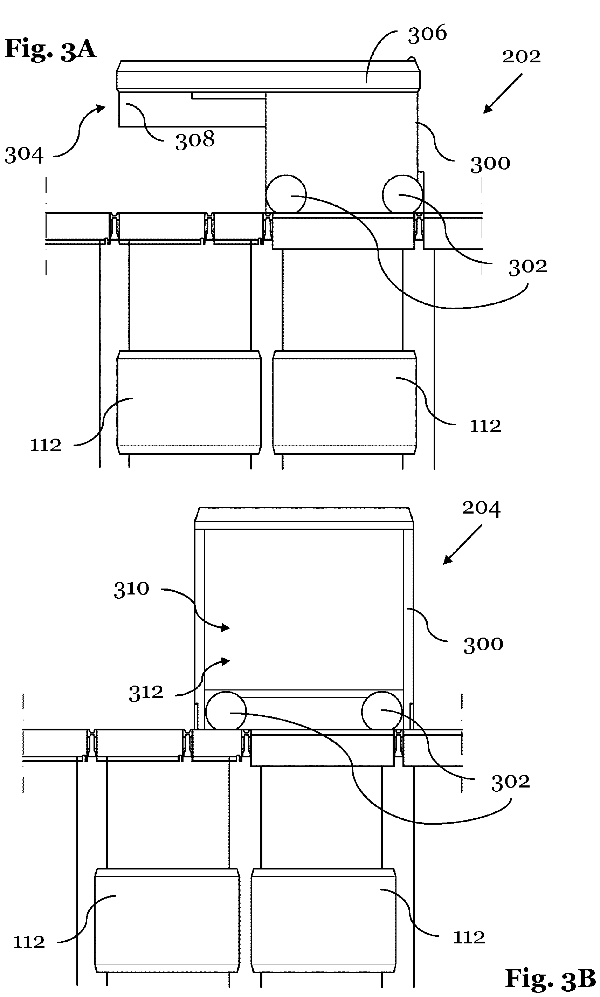

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

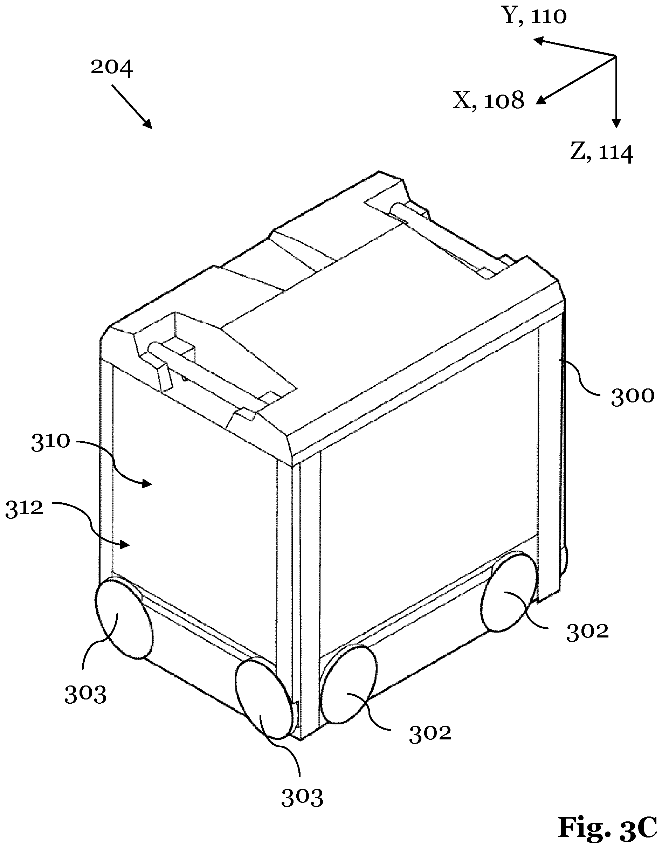

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

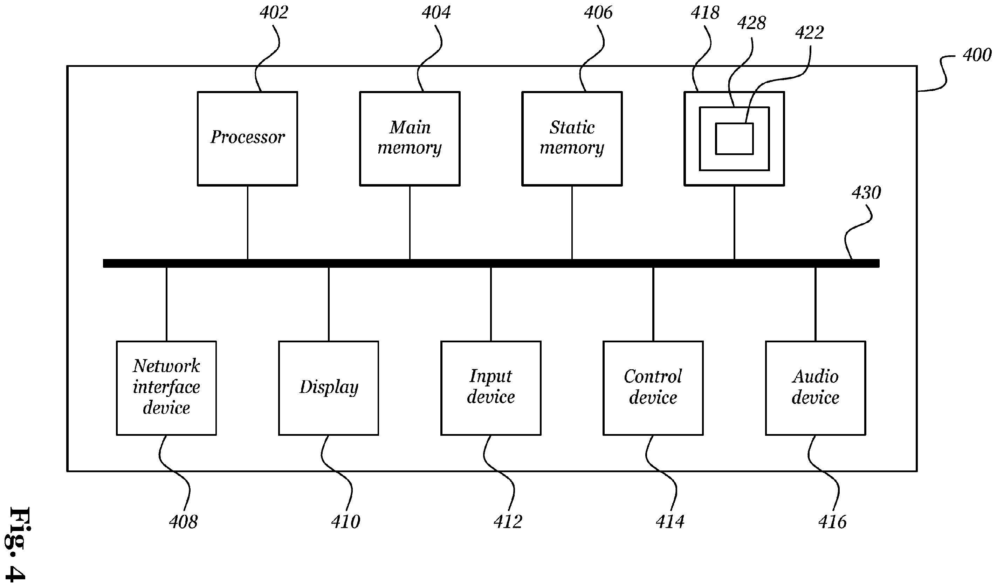

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary, as discussed above.

### Description of specific improvements

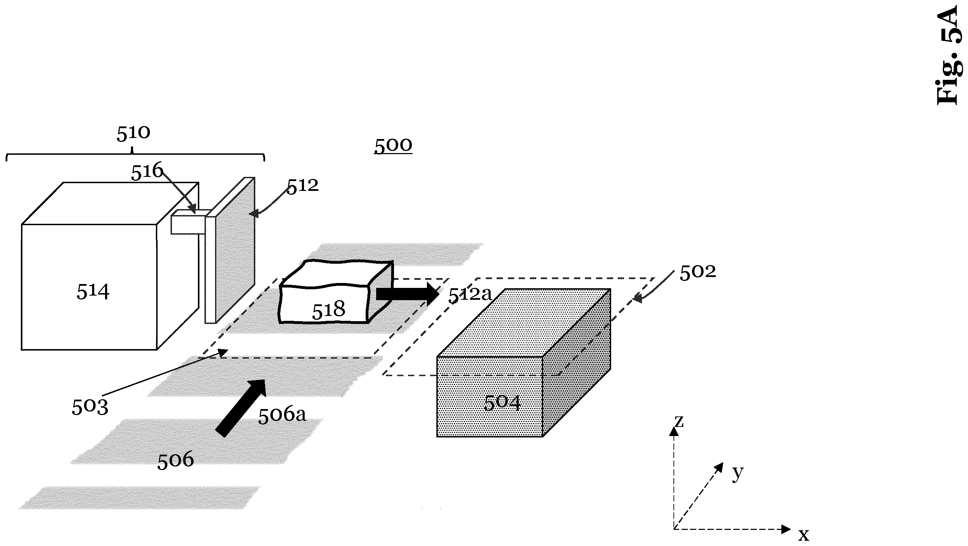

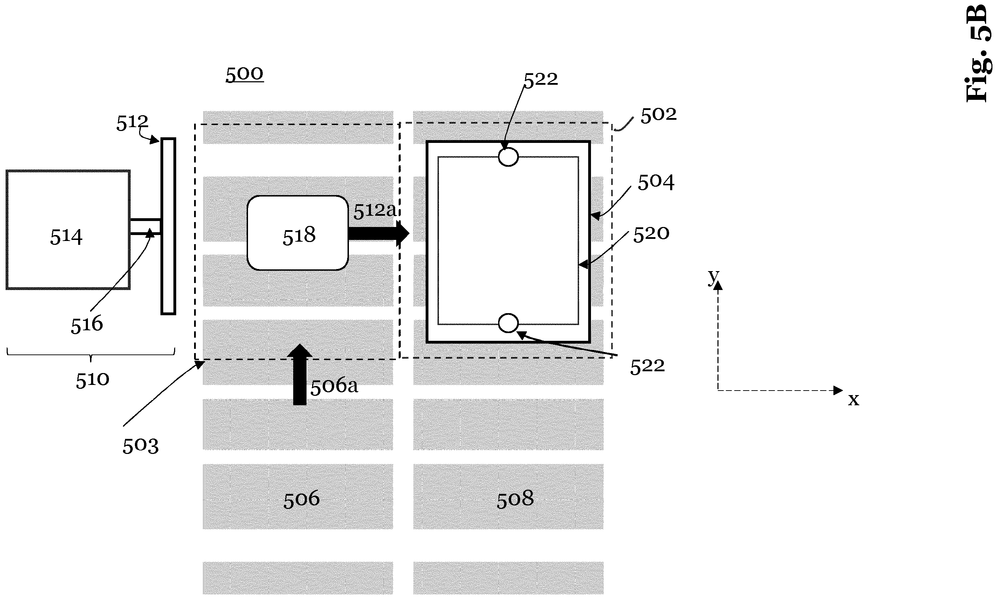

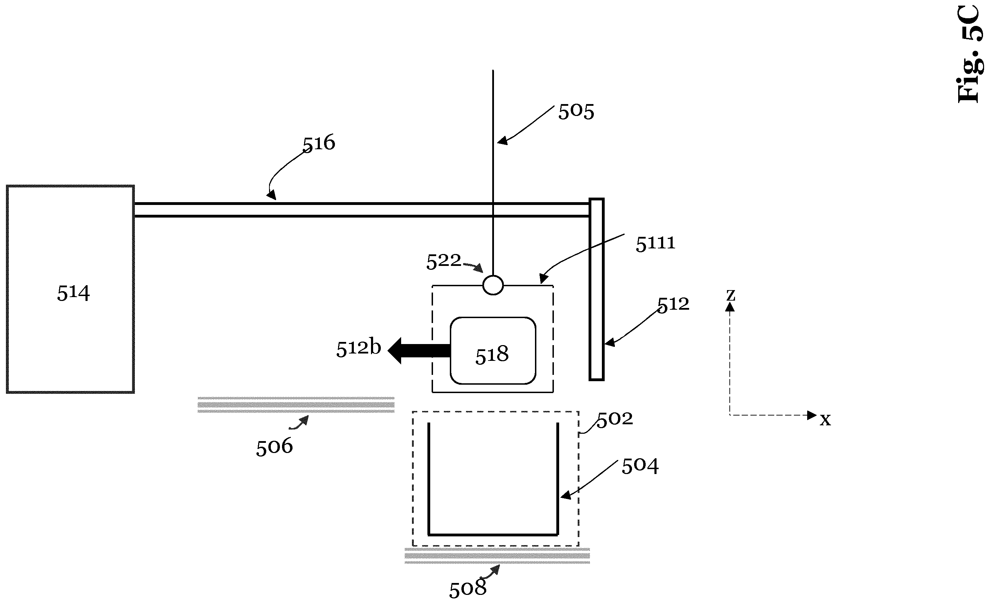

Referring to the embodiment shown in Fig. 5A, a goods handling station 500 for transferring goods to and/or from a bin of an automated storage and retrieval system is shown. The function of the goods handling station 500 to load goods into a bin will be described first with reference to Fig. 5A, Fig. 5B and Fig. 5C but primarily to Fig. 5B. The function of the goods handling station 500 to unload goods from a bin will then be described with reference to Fig. 5A, Fig. 5B and primarily Fig. 5C.

### Loading goods into a bin

The goods handling station 500 includes a bin receiving area 502 shown by the dotted lines in Fig. 5A. A bin 504 is located in the bin receiving area 502. In general, any bin of an automated storage and retrieval system may be received in the bin receiving area 502 by any suitable means known to the skilled person. For example, the bin may be received by means of horizontal movement on a bin conveyor (not shown in Fig. 5a) or the bin 504 may be lowered into the bin receiving area 502 from above by suspension means (e.g. via a port column 126, 128 or a robot 122), or the bin 504 may be raised into the bin receiving area 502 from below by raising means, or may be received in the bin receiving area 502 by any other suitable means. In some examples, the bin receiving area 502 may include a supporting surface (not shown) upon which a bin received at the bin receiving area rests. In general, however, the bin receiving area may comprise any suitable means for retaining a bin within that area such that goods may be transferred to or from the bin by the goods handling station.

Situated adjacent to the bin receiving area 502 is a first goods conveyor 506. The first goods conveyor 506 is shown in Fig. 5B and Fig. 5C as being substantially parallel to a bin conveyor 508. In other examples, the bin conveyor 508 may be arranged in any other suitable orientation in relation to the goods conveyor 506 (e.g., perpendicular). The first goods conveyor is generally arranged adjacent to the bin receiving area 502 and is configured to convey goods 518 (e.g., one or more items conventionally stored in an automated storage and retrieval system) in a conveying direction indicated by the arrow 506a. In more detail, the goods conveyor 506 comprises a transfer position 503 at which goods may be transferred to or from the bin 504 in a direction that is perpendicular to the conveying direction. The conveyor is thus configured to transport goods in a conveying direction towards or away from the transfer position 503, whilst a manipulator (described below) is configured to transport goods between the goods conveyor 506 and a bin 504 in a direction perpendicular to the conveying direction.

Referring again to Fig. 5A, the goods handling station 500 further includes goods manipulator 510. In the particular example shown, the goods manipulator 510 includes a first pushing element 512 movably connected to a main body 514 by means of an actuatable arm 516. In the particular example shown, the main body is situated adjacent to the first goods conveyor 506 and is arranged on an opposing side of the first goods conveyor 506 to the bin receiving area 502. However, in general, the goods manipulator may comprise one or more pushing elements connected in any suitable manner to a drive system capable of causing the pushing element 512 to move in a substantially horizontal direction that is substantially perpendicular to the conveying direction of the goods conveyor 506.

The operation of the goods handling system 500 for loading goods into a bin 504 received at the bin receiving area will now be described.

To load goods 518 into a bin 504 for storage in the storage grid (e.g., grid 100) of an automated storage and retrieval system, or otherwise, the goods conveyor 506 transports the goods 518 resting on the goods conveyor 506 in a conveying direction 506A towards the transfer position 503. When the goods 518 reach the transfer position 503 (which may, for example, be detected may suitable optical, electrical or other types of sensors), the goods conveyor 506 halts further movement of the goods. The bin 504 is received in the bin receiving area 502 which may occur before, substantially simultaneously, or after the arrival of the goods 518 at the transfer position 503.

The pushing element 512 of the goods manipulator 510 is then caused to move in a substantially horizontal direction indicated by arrow 512a such that the pushing element 512 makes contact with the goods 518 located at the transfer position and exerts a force on the goods in the direction indicated by arrow 512a (i.e., the loading direction), thus pushing the goods 518 towards the bin located at the bin receiving position. In the example shown, the pushing element 512 may be operated to move by movement or extension of the actuator arm 516 connected to the pushing element. However, more generally, any suitable driving means for causing movement of the pushing element in the manner described herein may be used. For example, the pushing element 512 may be slidably suspended beneath a horizontal rail that extends across the width of the goods conveyor 506 and the bin receiving area 502. The horizontal rail may facilitate movement of the pushing element in the direction indicated by arrow 512a, which is caused by any suitable drive means (e.g., rack and pinion, solenoid, pulley system, etc).

As can be seen in Fig. 5A, the movement of the goods 518 by the pushing element 512 is substantially perpendicular to the conveying direction of the goods 518 by the first goods conveyor 506. In other words, the loading direction 512a is substantially perpendicular to the conveying direction.

Once the pushing element 518 has moved to the opposing side of the first goods conveyor 506 from which to the side at which the main body 514 of the goods manipulator 510 is situated, the goods 518 are received in the bin 504. In general, the goods may be received through a top opening in the bin, whereby the top opening of the bin is arranged at a height lower than or substantially equal to the height of the goods conveyor 506 at the transfer position. Alternatively, the goods may be received through a side opening in the bin. In general, the bin receiving area may comprise retaining means for supporting any bin 504 received therein at the necessary height for horizontally transferring goods from the conveyor to the bin.

In some examples, the goods 518 may be received onto a bin insert 520 of the bin 504, as shown in Fig. 5b. For context, the bin receiving area may be configured to receive a bin 504 that comprises a main body 504 and an insert 520 typically situated within the main body. In such bins, goods are supported on a base of the insert 520. The insert is separable from the main body such that the insert 520 may be raised relative to the main body 504 (or the main body may be lowered relative to the insert). In particular, the insert 502 may be raised to a height equal to or above the main body to facilitate horizontal transfer of goods onto or off of the insert.

In such examples, the goods handling station may comprise a lifting device configured to lift an insert of a bin received in the bin receiving area such that the base of the insert is raised above the main body. In the example shown in Fig. 5B, the bin insert 520 has been lifted by means of lifting elements 522 on the insert itself. A lifting device may be configured to engage the lifting elements to lift of otherwise suspend the insert 520 relative to the main body 504 of the bin. Alternatively, the bin 504 could be lowered while the bin insert 520 is held in position or suspended from above such that goods 518 may be transferred in a substantially horizontal direction onto or off of the bin insert 520. Once the bin insert 520 has received the goods 518, the bin insert 520 may be lowered into the bin 504, or the bin 504 may be raised to meet the bin insert 520 such that goods 518 are received in the bin 504. In the present example, the bin insert 520 is lowered into the main body 504 of the bin 504 by a lifting device (not shown) arranged above the bin receiving area 502 that engages with the lifting elements 522 to raise or lower the bin insert 520 relative to the main body 504 of the bin.

In general, the bin insert comprises a base plate upon which goods (e.g., goods 518) may be supported and may further comprise three side walls or fewer. In one example, the bin insert 520 includes only side walls which are in a plane substantially parallel to the movement of the pushing element 512. The goods 518 may be pushed through an aperture left by the absence of side walls in a plane perpendicular to the direction of movement of the pushing element 512 such that the goods 518 received substantially horizontally at the bin insert 520.

In an example, the bin insert 520 may have two side walls. A bin insert 520 with two side walls which are in a plane perpendicular to the direction of movement of the pushing element 512 may allow the pushing element 512 to move to the opposing side of the bin insert 520 with respect the main body of the goods manipulator 510, such that the pushing element 512 is in position to begin an unloading operation.

In an alternative example, the bin insert 520 could have fewer than two side walls. For example, the bin insert 520 may not have any sidewalls and may consist only of a base plate, optionally with lifting elements 522. In such an example, a raising mechanism which pushes the base plate from below the floor of the bin 504 may be used, such that the base plate is pushed vertically upwards out of the bin to receive the goods 518 substantially horizontally. As above, a base plate may allow the pushing element 512 to move to the opposing side of the bin insert 520/base plate with respect the main body of the goods manipulator 510, such that the pushing element 512 is in position to begin an unloading operation.

At the end of a loading operation, the pushing element 512 may reset to the position in which the pushing element 512 is positioned on the same side of the first goods conveyor 506 as the main body 514 of the goods manipulator 510.

Alternatively, at the end of a loading operation, the pushing element 512 may be in a fully extended configuration such that the pushing element 512 is positioned on the opposing side of the bin conveyor 508 to the first goods conveyor 506. In such a configuration, the goods manipulator 510 is ready to begin an unloading operation as described below.

### Unloading goods from a bin

The goods handling station 500 may also configured to unload goods from a bin as described below with reference to Fig. 5a, Fig.5b and primarily Fig. 5c.

Fig. 5c shows a side view of the goods handling station 500. The reference numerals used to reference the elements of the goods handling station 500 of Fig. 5a and Fig. 5b are again used to reference the elements of Fig. 5c.

At the beginning of the unloading operation, the pushing element 512 of the goods manipulator 510 is positioned on an opposing side of the bin conveyor 508 and the first goods conveyor 506 from the main body 514 of the goods manipulator 510. In the particular example shown, the actuator arm 516 connecting the pushing element 512 to the main body 514 is therefore extended such that the pushing element is positioned on the opposite side of the conveyors 506, 508.

With reference to Fig. 5c, a bin 504 is received in the bin receiving area 502. The bin 504 may contain goods 518. The bin 504 may contain a bin insert 520 as described above. Once a bin 504 has been received in the bin receiving area 502, goods contained within the bin 504 are made available to be contacted from a substantially horizontal direction by the goods manipulator 504. For example, the bin insert 520 may be liftable such that the bin insert 520 can be raised out of and above the bin 504 by means of a lifting device 505. The lifting device may include cables with engaging portions that engage with lifting elements of the insert to lift the insert out of the main body of the bin. Alternatively, the insert may be raised from beneath the bin, by means of engaging pins that engage with an underside of a base of the insert via openings in the base of the main body, so that the engaging pins can exert an upwards force of the insert to raise it up and out of the main body. More generally, any suitable lifting means apparent to the skilled person may be used to raise the insert to a height whereby goods can be horizontally unloaded from or loaded onto the insert 520 under action of the goods manipulator 510.

In alternative examples, the bin 504 may be lowered while the bin insert 520 is held in position or suspended from above such that a separation between the bin insert 520 and the bin 504. Lifting elements 522 may connect with the bin insert 520 to lift the bin insert 520 or to hold the bin insert in position 520 while the bin 504 is lowered. In some examples where the bin 504 is lowered relative to the bin insert 520, the bin 504 may be lowered using lifting elements suspending the bin 504 from above.

The pushing element 512 of the goods manipulator 510 is then caused to move in a substantially horizontal direction (i.e., an unloading direction) indicated by arrow 512b such that the pushing element makes contact with the goods 518 located within the bin insert 520 and exerts a force on the goods in the direction by arrow 512b, thus pushing the goods 518 towards the transfer position 503 of the goods conveyor 506. The pushing element 512 may be operated by movement or contraction of the actuator arm 516 or by any other suitable means, such as being suspended beneath a horizontal rail as described above in relation to the loading operation.

As with the loading operation the movement of the goods 518 by the pushing element 512 of the goods manipulator 510 is substantially perpendicular to the conveying direction of the goods 518 by the goods conveyor 506. In other words, the unloading direction 512b is substantially perpendicular to the conveying direction.

After the goods 518 have been received on the first goods conveyor 506, the goods 518 may be transported away from the goods handling station by the first goods conveyor 506 in a conveying direction. The conveying direction is not indicated in Fig. 5c, but is either into or out of the page and thus substantially perpendicular to the unloading direction indicated by arrow 512b.

Once the first goods conveyor 506 has moved the goods 518 in the conveying direction, the pushing element 512 may reset to the position adjacent to the main body 514 of the goods manipulator 510. This may be achieved by contracting the actuator arm 516 of the goods manipulator 510 completely.

### Alternative goods manipulator

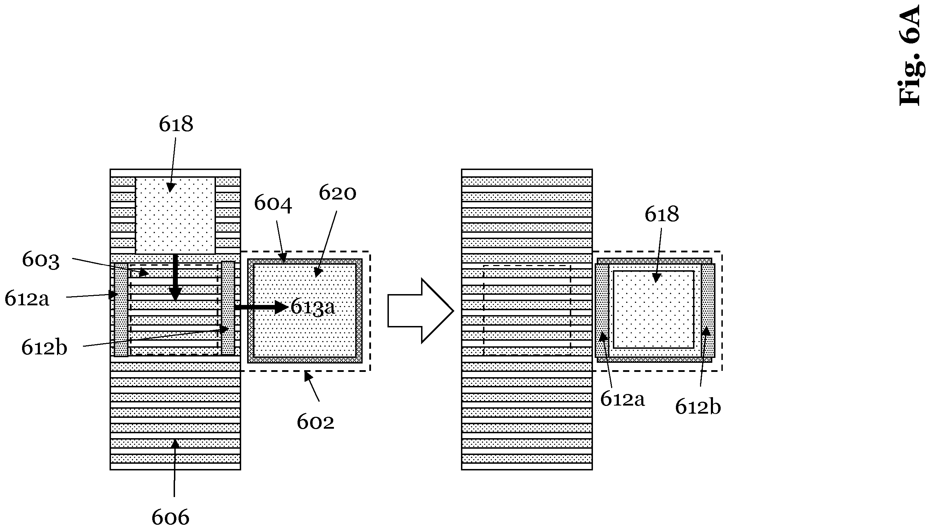

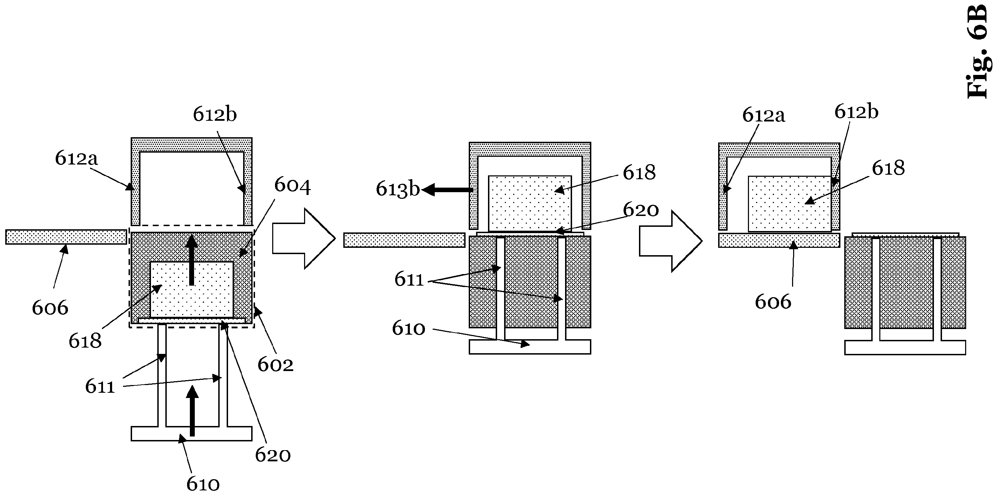

With reference to Fig. 6A, a plan view of a goods handling station 600 according to an alternative embodiment of the present disclosure is depicted. The goods handling station comprises a bin receiving area 602, a goods conveyor 606 and a goods manipulator 610 comprising a first pushing element 612a and a second pushing element 612b, which may be rigidly connected as shown in Fig. 6B. The structure and operation of the goods handling station 600 is substantially similar to the operation of the goods handling station 500 depicted in Figs. 5A - 5C and as described above. As such, the general description of a goods handling station is not repeated here.

Fig. 6A illustrates a loading operation of the goods handling station 600, in which goods 618 are conveyed to a transfer position 603 of the goods conveyor before the goods are moved, by the pushing element 612a of the goods manipulator 610, towards the bin 604 located in the bin receiving area 602. Prior to the goods being conveyed to the transfer position, the goods manipulator is arranged in a loading configuration in which the pushing elements are situated above or proximal to the goods conveyor, and in particular the transfer position of the goods conveyor.

In more detail, goods 618 are transported along the goods conveyor 606 in the direction indicated by arrow 606a towards the transfer position 603 of the goods conveyor 606. When the goods 618 reach the transfer position 603, the conveyor halts further movement of the goods 618. A drive system for the goods manipulator (omitted from the figure for the sake of clarity and simplicity) causes the pushing elements 612a, 612b to move in the direction indicated by arrow 613a towards the bin located at the bin receiving area. In doing so, the first pushing element 612a will contact the goods 618 located on the goods conveyor 606 at the transfer position 603 and exert a substantially horizontal force on those goods 618 in the direction indicated by arrow 613a, thus moving the goods towards the bin 604 located at the bin receiving area. As described above in relation to Figs. 5A - 5C, the bin may include an insert 620, such as a base plate that has been raised by a lifting device to a height above any sidewalls 604a of the main body of the bin, such that the bin insert can receive goods thereon from a horizontal direction. In other words, this means that goods can be horizontally loaded onto the bin insert.

Once the bin has been loaded, the bin may be transported elsewhere, for example returning to the storage grid (e.g., grid 100) for storage of the goods 618. In some examples, a new bin may subsequently be received at the bin receiving position for loading or unloading of goods. If the new bin contains goods to be unloaded, the goods manipulator is already in the unloading configuration (see below). If the new bin is designated for loading of goods located on the goods conveyor, the goods manipulator may return to the loading configuration prior to the goods arriving on the conveyor to the transfer position.

With reference to Fig. 6B, a side-on view of the goods handling station 600 shown in Fig. 6A is shown. Fig. 6B illustrates an unloading operation for the goods handling station, in which goods are transferred off of an insert 620 of a bin 604 and onto the goods conveyor 606, whereby the goods may be transported elsewhere by the goods conveyor.

In more detail, Fig. 6B illustrates a lifting device 610 arranged beneath the bin receiving area 602 at which a bin 604 is located. In this particular example, the lifting device comprises a plurality of pins 611 that are receivable through corresponding openings in the underside of the main body of the bin 604. When raised by a suitable drive system (not shown in the figure), the pins are raised through the openings in the main body of the bin and engage with the underside of the bin insert 620, exerting an upwards pushing force on the bin insert 620 and thereby raising the bin insert relative to the main body of the bin. The lifting device is configured to raise the insert 620 to a height such that goods can be loaded onto or off of the insert 620 in a horizontal direction. Generally, this means that the lifting device is configured to raise the insert to a height whereby the base of the insert upon which goods are supported is at least as high as the sidewalls of the main body. However, prior to the lifting device raising the bin insert, the goods manipulator 610 is arranged in an unloading configuration in which the pushing elements 612a, 612b are situated above or proximal to the bin receiving area 602.

When the bin insert has been raised to the necessary height for horizontal transfer of goods, the drive system for the goods manipulator causes the pushing elements 612a, 612b, which as seen in the figure are integrally and rigidly connected in this example, to move in the direction indicated by arrow 613b towards the goods conveyor 606 (and in particular, the transfer position 603 of the goods conveyor 606). In doing so, the second pushing element 612b will contact the goods 618 located on the bin insert 620 and exert a substantially horizontal force on those goods in the direction indicated by arrow 613b, thus moving the goods towards the goods conveyor 606.

Once the goods 618 have been unloaded from the bin, the goods may be transported elsewhere (i.e., away from the transfer position) by the goods conveyor 606. The bin may be returned to the storage grid or new goods may be transported to the transfer position of the goods conveyor for loading into the bin. If new goods are provided by the goods conveyor, the goods manipulator is already in the loading configuration (after it has unloaded goods from the bin) and thus is ready to immediately load the bin/a new bin without reconfiguration. If a new bin is received at the bin receiving area 602 containing goods to be unloaded, the goods manipulator may return to the unloading configuration prior to the bin insert being raised by the lifting device 610.

### Additional goods conveyor

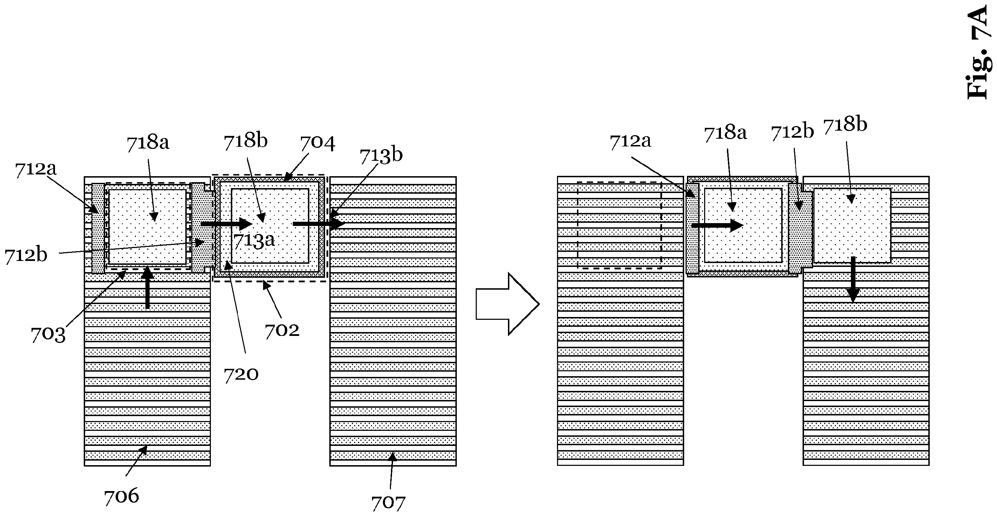

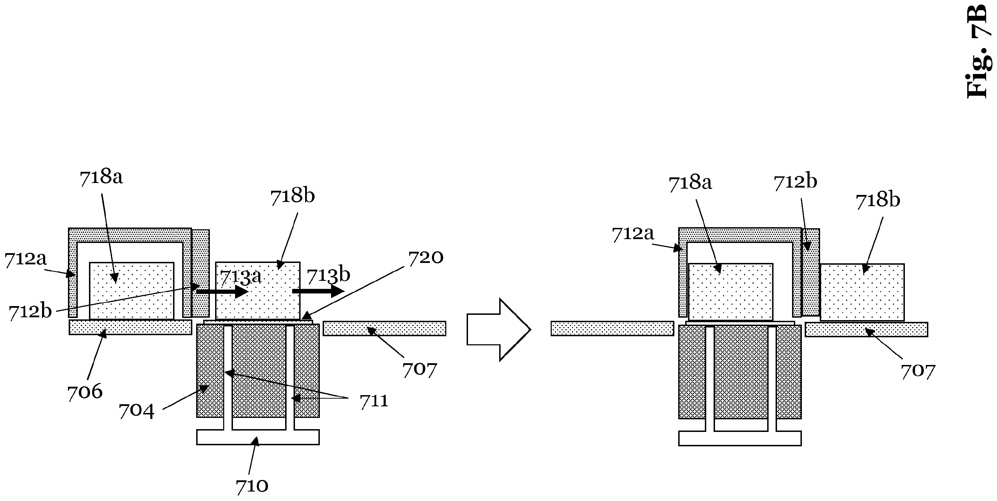

With reference to Fig. 7A, a plan view of a goods handling station 700 according to an alternative embodiment of the present disclosure is depicted. Fig. 7B depicts a side-on view of the goods handing station 700. The goods handling station 700 is substantially similar to that depicted in Figures 6A and 6B and described above. The goods handling station comprises a bin receiving area 702, a goods conveyor 706 and a goods manipulator 710 comprising a first pushing element 712a and a second pushing element 712b, which may be rigidly connected as shown in Fig. 6B. The structure and operation of the goods handling station 700 is substantially similar to the operation of the goods handling station 500 and 600 depicted in Figs. 5A - 6B and as described above. As such, the general description of a goods handling station is not repeated here.

The goods handling station 700 further comprises a second goods conveyor 707 arranged adjacent to the bin receiving area 702 on an opposite side of the bin receiving area relative to the first goods conveyor 706. In this particular example, the first goods conveyor 706 is configured to transport goods 718 towards a transfer position 703 of the first goods conveyor 706, whilst the second goods conveyor 707 is configured to transport goods away from the goods handling station 700.

The goods manipulator 710 is substantially similar to the manipulator 610 described above in relation to Figs. 6A and 6B and includes a first pushing element 712a and a second pushing element 712b. In a similar manner to that described above in relation to Fig. 6A, in a loading operation, the first pushing element exerts a horizontal force on goods 718a located at the transfer position 703 to move the goods 718a in the direction indicated by arrow 713a towards the bin located at the bin receiving area. Similarly, in an unloading operation, the second pushing element exerts a horizontal force on goods 718b located in the bin 704/on an insert 720 of the bin to move the goods 718b in the direction indicated by arrow 713b towards the second conveyor 707. Thus, in this embodiment, the presence of the second conveyor 707 on an opposite side of the bin receiving area to the first conveyor 706 facilitates loading and unloading in substantially the same direction (i.e., the loading direction indicated by arrow 713a is in the same direction as the unloading direction indicated by arrow 713b). By contract, the loading and unloading directions of the embodiments of Figures 5A - 6B are in substantially opposite directions.

As shown in Figs. 7A and 7B, the provision of the second conveyor 707 facilitates simultaneous loading and unloading of a bin received at the bin receiving area. In more detail, the presence of the second conveyor in the particular arrangement shown enables the first pushing element to load goods 718a into/onto the bin from the transfer position of the first conveyor 706, whilst the second pushing element simultaneously unloads goods 718b from the bin and onto the second conveyor 707.

### Method of operation

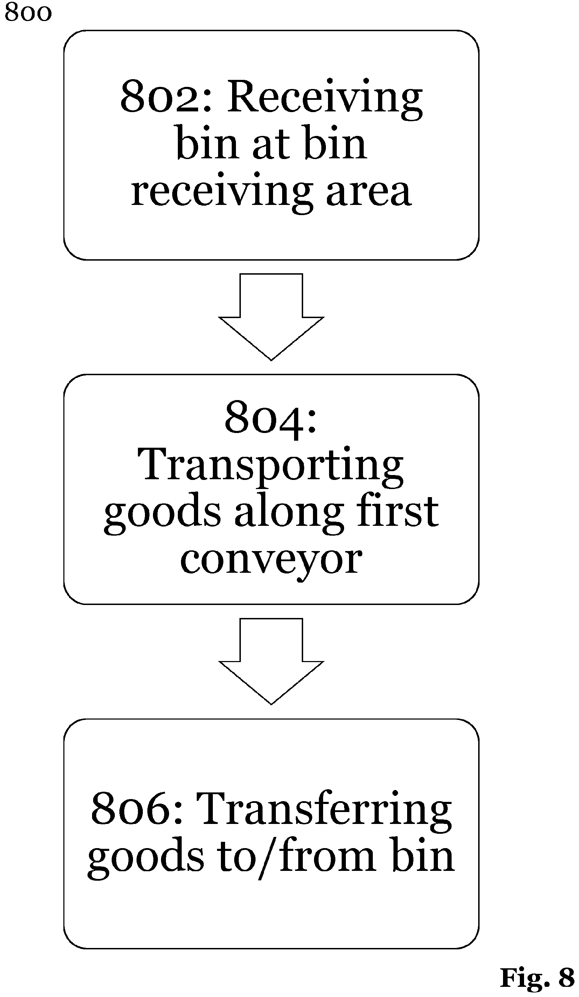

Fig. 8 depicts a flowchart of a method 800 of transferring goods between a bin receiving area and a first goods conveyor of an automated storage and retrieval system. The method includes the following operations. These operations are achieved by means of the apparatus elements described above with reference to any of Figs. 5A-7B.

The method comprises a step 802 of receiving, at a bin receiving area, a bin of the automated storage and retrieval system. Receiving a bin at a bin receiving area may include receiving a bin containing goods, receiving an empty bin, receiving a bin containing a bin insert containing goods or receiving a bin containing an empty bin insert. The bin may be received from a port or through a port column of the automated storage and retrieval system. Alternatively the bin may be received from the grid in order to load or unload goods without the bin leaving the automated storage and retrieval system.

The method further comprises a step 804 of conveying, by the first goods conveyor, goods towards or from the transfer position of the first goods conveyor in a conveying direction. In operation 804, conveying may comprise moving the goods on the first conveyor towards a transfer position from which the goods can be loaded into a bin located at the bin receiving area. Alternatively, in operation 804, conveying may comprise moving the goods on the first goods conveyor away from a transfer position at which the goods have arrived once being unloaded by means of means of transferring the goods out of a bin located at the bin receiving area. Depending on whether step 804 involves conveying goods towards or away from the transfer position, it would be appreciated that this step may take place before or after step 806 described below.

The method further comprises a step 806 of moving, by the goods manipulator, goods between the transfer position of the first goods conveyor and a bin received at the bin receiving area.

In a loading example, operation 806 comprises moving the goods from the transfer position of the first goods conveyor to a bin received at a bin receiving area subsequent to step 804 at which the goods are conveyed to the transfer position by the first goods conveyor. This movement may include the movement of the goods from the transfer position in a substantially horizontal direction to a bin insert, to then be lowered into the bin.

In an unloading example, operation 806 comprises moving the goods from a bin received at the bin receiving area to the transfer position of the first goods conveyor prior to step 804 at which the goods are conveyed away from the transfer position by the first goods conveyor. This movement may include the movement of the goods from a bin insert, which has been lifted out of the bin, in a substantially horizontal direction to a transfer position of the first goods conveyor.

In operation 806, the goods are moved in a substantially horizontal direction that is substantially perpendicular to the conveying direction. That is, in operation 806, in either of the loading example or the unloading example, the goods are moved directionally perpendicular when being transferred between the transfer position of the first goods conveyor and the bin received in the bin receiving area with respect to the direction the goods are moved in when being transferred towards or away from the transfer position of the first goods conveyor.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A goods handling station for transferring goods to and/or from a bin of an automated storage and retrieval system, the goods handling station comprising:
a bin receiving area configured to receive a bin of the automated storage and retrieval system;
a first goods conveyor comprising a transfer position arranged adjacent to the bin receiving area, the first goods conveyor configured to move goods in a conveying direction towards or away from the transfer position; and
a goods manipulator configured to move goods in at least one direction between the transfer position of the goods conveyor and a bin received at the bin receiving area, wherein the goods manipulator is configured to move items in a substantially horizontal direction that is substantially perpendicular to the conveying direction.

2. The goods handling station of claim 1, wherein the bin receiving area is configured to receive a bin comprising a main body and a bin insert separable from the main body, and wherein the goods manipulator is configured to move goods in at least one direction between the first goods conveyor and the bin insert of the bin received at the bin receiving area.

3. The goods handling station of claim 2 further comprising a lifting device configured to lift an insert of a bin received at the bin receiving area relative to the main body of the bin such that goods may be moved substantially horizontally between the first goods conveyor and the bin insert.

4. The goods handling station of claim 3, wherein the lifting device comprises engaging portions configured to engage with lifting elements of the bin insert to exert an upwards pulling force on the bin insert.

5. The goods handling station of claim 3, wherein the lifting device comprises one or more engaging pins arranged beneath the bin receiving area, wherein the one or more engaging pins are configured to engage with an underside of the bin insert to exert an upwards pushing force on the bin insert.

6. The goods handling station of claim 2 further comprising a lowering device configured to lower a main body of a bin received at the bin receiving area relative to bin insert such that goods may be moved substantially horizontally between the first goods conveyor and the bin insert.

7. The goods handling station of any preceding claim, wherein the goods manipulator comprises at least one pushing element capable of moving goods in at least one direction between the first goods conveyor and a bin received at the bin receiving area.

8. The goods handling station of any preceding claim, wherein the goods manipulator comprises a first pushing element capable of moving goods from the transfer position towards the bin receiving area, and further comprises a second pushing element capable of moving goods from the bin receiving area towards the transfer position, wherein the first and second pushing elements are spaced apart along the movement direction.

9. The goods handling station of any preceding claim, further comprising a second goods conveyor arranged adjacent to the receiving area on the opposite side to the first goods conveyor, wherein the first conveyor is configured to carry goods towards the goods handling station, and wherein the second conveyor is configured to carry goods away from the goods handing station.

10. The goods handling station of claim 9, wherein the goods manipulator is configured to move goods from the first conveyor towards the bin receiving area, and is further configured to move goods from a bin located at the bin receiving area towards the second conveyor.

11. The goods handling station of claim 10, wherein the goods manipulator is configured to move a first set of one or more items from the first conveyor towards a bin insert of a bin located at the bin receiving area and simultaneously move a second set of one or more items from the bin insert towards the second goods conveyor.

12. A method of transferring goods to and/or from a bin of an automated storage and retrieval system using a goods handling station according to any preceding claim, the method comprising:
receiving, at the bin receiving area, a bin of the automated storage and retrieval system;
conveying, by the first goods conveyor, goods towards or away from the transfer position in a conveying direction; and
moving, by the goods manipulator, goods between the first goods conveyor and a bin received at the bin receiving area, wherein the goods are moved in a substantially horizontal direction that is substantially perpendicular to the conveying direction.

13. The method according to claim 12, wherein the moving further comprises:
moving, by the goods manipulator, the goods from the transfer position of the first goods conveyor to the bin received at the bin receiving area subsequent to the conveying of the goods to the transfer position by the first goods conveyor.

14. The method according to claim 12, wherein the moving further comprises:
moving, by the goods manipulator, the goods from the bin received at the bin receiving area to the transfer position of the first goods conveyor prior to the conveying of the goods away from the transfer position by the first goods conveyor.
